(19) Europäisches Patentamt
European Patent Office
Office européen des brevets

(11) **EP 2 032 342 B1**

(12) **FASCICULE DE BREVET EUROPEEN**

(45) Date de publication et mention
de la délivrance du brevet:
**05.09.2012 Bulletin 2012/36**

(51) Int Cl.:
***B29C 65/08*** (2006.01)

(21) Numéro de dépôt: **07788960.8**

(86) Numéro de dépôt international:
**PCT/FR2007/051375**

(22) Date de dépôt: **05.06.2007**

(87) Numéro de publication internationale:
**WO 2007/141454 (13.12.2007 Gazette 2007/50)**

(54) **ENSEMBLE D'UN PISTOLET DE SOUDURE**

SCHWEISSPISTOLENANORDNUNG

WELDING GUN ASSEMBLY

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **09.06.2006 FR 0652089**

(43) Date de publication de la demande:
**11.03.2009 Bulletin 2009/11**

(73) Titulaire: **Compagnie Plastic Omnium
69007 Lyon (FR)**

(72) Inventeurs:
• **VIRELIZIER, François
38080 Saint Marcel Bel Accueil (FR)**

• **BRIZIN, Jérôme
01100 Arbent (FR)**

(74) Mandataire: **Thiollier, Clémence-Olivia Laure
Marie et al
Cabinet Lhermet La Bigne & Remy
11, boulevard de Sébastopol
75001 Paris (FR)**

(56) Documents cités:
FR-A1- 2 605 539          JP-A- 2005 205 858
US-A- 3 184 354           US-A- 4 364 511
US-A- 4 490 199           US-B2- 7 087 137

**Description**

Domaine technique:

La présente invention concerne un ensemble d'un pistolet de soudure et de son système de contrôle, ainsi qu'une sonotrode pour pistolet de soudure.

Etat de la technique :

On connaît déjà dans l'état de la technique un tel ensemble, le pistolet étant destiné à souder par ultrasons un élément sur une pièce en matière thermoplastique, au moyen d'une soudure par point ou par bouterollage. Ce pistolet est en particulier utilisé pour souder des composants sur des pièces de véhicule automobile.

Le pistolet consomme une certaine puissance et comporte une poignée, une sonotrode, et une gâchette d'actionnement de la sonotrode. On entend par « sonotrode » les moyens de transmission des ultrasons, agencés sur le pistolet, prenant de préférence la forme d'une tige reliée à des moyens d'émission des ultrasons. L'ensemble comporte également des moyens d'arrêt automatique de la sonotrode, agencés dans le système de contrôle, ce dernier étant généralement distinct du pistolet.

Ces moyens d'arrêt automatique de la soudure ont pour but d'obtenir une soudure identique quel que soit l'opérateur qui manipule le pistolet.

Généralement, les moyens d'arrêt automatique sont déclenchés lorsqu'une certaine durée de soudure est dépassée, lorsqu'une certaine énergie a été consommée, ou encore lorsqu'un certain seuil de puissance est dépassé. Un example d'un tel pistolet est décrit dans le document US 3184354.

Problème posé par cet état de la technique :

Néanmoins, ces pistolets ne sont pas pleinement satisfaisants car l'on constate des différences entre les soudures, dues notamment aux différences de vitesse et de pression entre les opérateurs. Ces différences entre les soudures sont particulièrement gênantes sur les pièces de carrosserie puisqu'une soudure trop courte assure une mauvaise fixation, et une soudure trop profonde génère une non conformité de la fixation, par exemple due à la présence de fils plastiques.

Solution proposée par l'invention :

La présente invention vise à résoudre cet inconvénient en proposant un ensemble fournissant des soudures identiques, quel que soit l'opérateur qui les exécute.

A cet effet, l'invention a pour objet un ensemble d'un pistolet de soudure et de son système de contrôle, le pistolet étant destiné à souder par ultrasons un élément sur une pièce en matière thermoplastique, consommant une certaine puissance, et comportant une poignée, une sonotrode, une gâchette d'actionnement de la sonotrode, l'ensemble comportant également des moyens d'arrêt automatique de la sonotrode, caractérisé en ce que l'ensemble comprend des moyens de détection du franchissement d'une valeur seuil par la variation de l'augmentation de puissance consommée, et en ce que les moyens d'arrêt automatique sont reliés aux moyens de détection, de manière à être déclenchés lorsque cette détection est positive.

Grâce à cet ensemble, on détecte la variation de l'augmentation de la puissance consommée, ce qui traduit le fait que la sonotrode entre en contact de façon satisfaisante avec une surface, dite surface de contact, généralement celle de l'élément soudé sur la pièce, ou la surface formée par de la matière plastique fondue. Comme ce moment correspond exactement au moment où l'élément est soudé de façon satisfaisante sur la pièce en matière thermoplastique, l'arrêt de la soudure ne dépend pas de la manipulation de l'opérateur.

Ainsi, l'invention propose de déclencher l'arrêt de la soudure par la mesure d'un paramètre, la variation de l'augmentation de la puissance consommée, ce dernier prenant en compte indirectement la force de réaction exercée par la surface de contact sur le pistolet, traduite par l'augmentation subite de puissance consommé. Ce paramètre traduit que la soudure en cours est satisfaisante, alors que dans l'état de la technique, le paramètre mesuré pour déclencher l'arrêt de la soudure, une durée, une énergie ou une puissance, était un paramètre indépendant de la réaction de l'élément et de la pièce soudés, qui ne traduisait donc pas la qualité effective de la soudure mais une qualité théorique calculée à partir de soudures précédentes.

En outre, grâce à cette façon de déclencher l'arrêt de la soudure, on peut conserver les mêmes réglages du pistolet et de son système de contrôle pour effectuer deux soudures différentes, par exemples des soudures sur des nervures de hauteur différente.

Modes de réalisation particuliers avantageux :

L'invention peut en outre comporter l'une ou plusieurs des caractéristiques suivantes :

- L'ensemble comporte une mémoire de stockage de la valeur seuil, de préférence agencée dans le système de contrôle.
- Les moyens de détection comportent des moyens de détermination de la variation de l'augmentation de puissance consommée, et des moyens de comparaison de cette variation avec la valeur seuil stockée dans la mémoire.
- La valeur seuil à franchir pour que les moyens de détection déclenchent les moyens d'arrêt est supérieure à 5%.
- L'ensemble comporte des moyens de mesure de l'énergie consommée par le pistolet, aptes à activer les moyens de détection uniquement lorsqu'une quantité d'énergie minimale a été consommée par le pistolet.
- Le système de contrôle fait partie d'un générateur distinct du pistolet.

L'invention a également pour objet une sonotrode pour un pistolet d'un ensemble tel que défini ci-dessus, comportant une surface dite d'appui destinée à s'appuyer contre une surface dite de contact au cours de la soudure, dans laquelle la surface d'appui est plane et est supérieure à 10 mm$^2$ (millimètres carrés), de préférence supérieure à 20 mm$^2$. Une telle surface de contact permet ainsi de générer une augmentation de puissance plus importante lorsque la sonotrode arrive en contact avec la surface de contact.

Description d'exemples :

L'invention sera mieux comprise à la lecture de la description qui va suivre, donnée uniquement à titre d'exemple et faite en se référant aux dessins dans lesquels :

- la figure 1 est une vue schématique d'un ensemble comprenant une sonotrode selon un premier mode de réalisation de l'invention ;
- la figure 2 est une vue agrandie de la sonotrode de la figure 1 ;

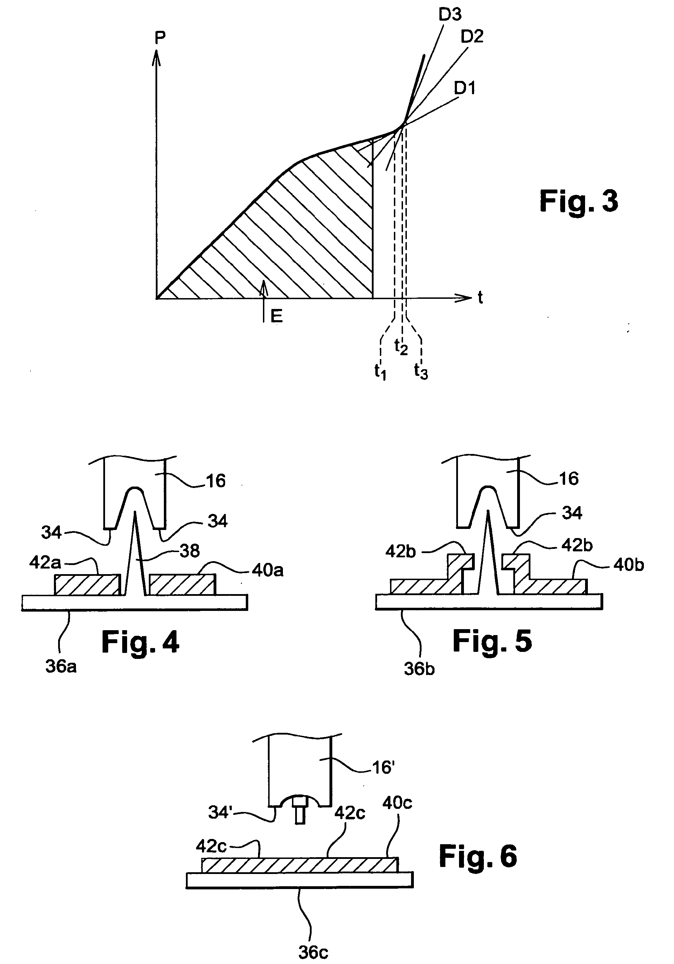

- la figure 3 est un graphique schématique représentant l'évolution de la puissance consommée par le pistolet de l'ensemble de la figure 1 en fonction du temps ;
- la figure 4 est une vue schématique de la sonotrode de la figure 1 avant un premier type de soudure ;
- la figure 5 est une vue schématique de la sonotrode de la figure 1 avant un second type de soudure ; et
- La figure 6 est une vue schématique d'une sonotrode selon un second mode de réalisation de l'invention avant un troisième type de soudure.

| Références sur les figures | Vocabulaire général | Désignation dans les exemples |
|---|---|---|
| 10 | Pistolet de soudure | |
| 12 | Système de contrôle | Le système de contrôle 12 est agencé dans un générateur électrique. |
| 14 | Poignée | |
| 16, 16' | Sonotrode | |
| 18 | Gâchette d'actionnement de la sonotrode | |
| 20 | Emetteur d'ultrasons | |
| 22 | Moyens d'arrêt automatique de la sonotrode | |
| 24 | Moyens de détection du franchissement d'une valeur seuil par la variation de l'augmentation de puissance consommée | |
| 26 | Moyens de détermination de la variation de l'augmentation de puissance consommée | Ils comprennent des moyens de mesure de la pente $a_1$, $a_2$, $a_3$ des droites $D_1$, $D_2$, $D_3$ et des moyens de calcul de la variation de pente. |

(suite)

| Références sur les figures | Vocabulaire général | Désignation dans les exemples |
|---|---|---|
| 28 | Moyens de comparaison de cette variation avec la valeur seuil stockée dans la mémoire | |
| 30 | Mémoire de stockage de la valeur seuil | La valeur seuil stockée est de 5% |
| 32 | Moyens de mesure de l'énergie consommée par le pistolet, aptes à activer les moyens de détection uniquement lorsqu'une quantité d'énergie minimale a été consommée par le pistolet. | |
| 34, 34' | Surface d'appui de la sonotrode | Elle est de 20mm$^2$, comprenant deux surfaces planes, mesurant chacune 10mm$^2$, séparées par un évidement semi-cylindrique, servant à former une bouterolle avec la nervure 38 |
| 36a, 36b, 36c | Pièce en matière thermoplastique | Pièce de véhicule automobile |
| 38 | Nervure destinée à être fondue pour former une accroche mécanique (bouterolle) | |
| 40a, 40b, 40c | Elément | Elément en matière thermoplastique que l'on soude sur la pièce 36a, 36b, 36c au moyen de l'ensemble selon l'invention |
| 42a, 42b, 42c | Surface de contact | |
| P | Puissance consommée par le pistolet 10 | |
| t | Temps | |
| E | Surface correspondant à l'énergie minimale devant être consommée par le pistolet avant l'activation des moyens de détection 24 | |
| $D_1$ | Tangente à la courbe à un instant $t_1$ | |
| $D_2$ | Tangente à la courbe à un instant $t_2$ | |
| $D_3$ | Tangente à la courbe à un instant $t_3$ | |

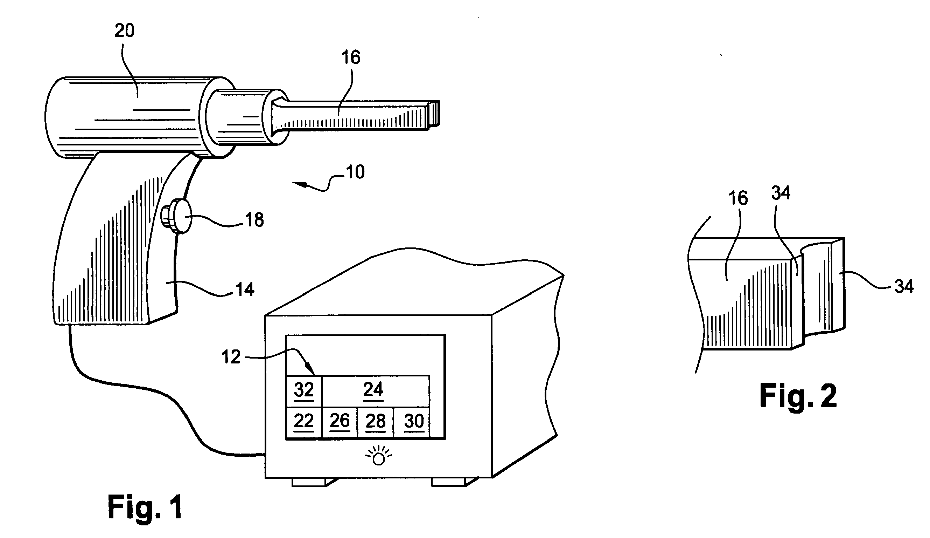

Avec l'ensemble du pistolet 10 et du système 12 de la figure 1, on peut souder par ultrasons l'élément 40a, 40b, 40c sur la pièce 36a, 36b, 36c.

Les moyens 26 mesurent par exemple les pentes $a_1$, $a_2$, $a_3$ des droites $D_1$, $D_2$, $D_3$ et calculent la variation de ces pentes en calculant les valeurs $v_i = \dfrac{a_{i+1} - a_i}{a_i} \cdot$ .

Puis, dès que l'on obtient une valeur $v_i$ telle que $v_i \geq 5\%$, cela signifie que l'augmentation de puissance consommée varie beaucoup, du fait que la surface d'appui 34, 34' de la sonotrode entre en contact avec la surface de contact 42a, 42b, 42c de l'élément soudé. Alors, les moyens 24 déclenchent les moyens 22 qui arrêtent automatiquement la sonotrode 16, 16'.

Cette surface de contact pourrait être composée de la surface de l'élément soudé, recouverte de matière plastique fondue, par exemple celle de la bouterolle 38.

# EP 2 032 342 B1

**Revendications**

1. Ensemble d'un pistolet de soudure (10) et de son système de contrôle (12), le pistolet étant destiné à souder par ultrasons un élément (40a, 40b, 40c) sur une pièce en matière thermoplastique (36a, 36b, 36c), consommant une certaine puissance, et comportant une poignée (14), une sonotrode (16, 16'), une gâchette (18) d'actionnement de la sonotrode, l'ensemble comportant également des moyens (22) d'arrêt automatique de la sonotrode, l'ensemble comprenant des moyens (24) de détection du franchissement d'une valeur seuil par la variation de l'augmentation de puissance consommée, et les moyens d'arrêt automatique étant reliés aux moyens de détection, de manière à être déclenchés lorsque cette détection est positive, l'ensemble comportant une mémoire (30) de stockage de la valeur seuil.

2. Ensemble selon la revendication 1, dans lequel les moyens de détection (24) comportent des moyens (26) de détermination de la variation de l'augmentation de puissance consommée, et des moyens (28) de comparaison de cette variation avec la valeur seuil stockée dans la mémoire.

3. Ensemble selon l'une quelconque des revendications 1 à 2, dans lequel la valeur seuil à franchir pour que les moyens de détection (24) déclenchent les moyens d'arrêt (22) est supérieure à 5%.

4. Ensemble selon l'une quelconque des revendications 1 à 3, comportant des moyens (32) de mesure de l'énergie consommée par le pistolet, aptes à activer les moyens de détection (24) uniquement lorsqu'une quantité d'énergie minimale a été consommée par le pistolet.

5. Ensemble selon l'une quelconque des revendications 1 à 4, dans lequel le système de contrôle (12) appartient à générateur distinct du pistolet.

6. Ensemble selon l'une quelconque des revendications 1 à 5, dans lequel la sonotrode (16, 16') comporte une surface (34, 34') dite d'appui destinée à s'appuyer contre une surface (42a, 42b, 42c) dite de contact au cours de la soudure, dans laquelle la surface d'appui est plane et est supérieure à 10mm$^2$, de préférence supérieure à 20mm$^2$.

**Claims**

1. Welding gun assembly (10) and a system for controlling same (12), the gun being designed for ultrasonic welding of an element (40a, 40b, 40c) on a thermoplastic component (36a, 36b, 36c), consuming a certain amount of power, and comprising a handle (14), a sonotrode (16, 16'), a trigger (18) for actuating the sonotrode, the assembly further comprising means (22) for automatically stopping the sonotrode, the assembly comprising means (24) for detecting excess of a threshold value due to variation of the increase in the power consumed, and the automatic stopping means being connected to the detection means, so as to be triggered when said detection is positive, the assembly comprising a memory (30) for storing the threshold value.

2. Assembly according to claim 1, wherein the detection means (24) comprise means (26) for determining the variation of the increase in the power consumed, and means (28) for comparing this variation with the threshold value stored in the memory.

3. Assembly according to any of claims 1 to 2, wherein the threshold value to be crossed so that the detection means (24) trigger the stopping means (22) is greater than 5 %.

4. Assembly according to any of claims 1 to 3, comprising means (32) for measuring the energy consumed by the gun, able to activate the detection means (24) only when a minimum quantity of energy has been consumed by the gun.

5. Assembly according to any of claims 1 to 4, wherein the control system (12) belongs to a generator separate from the gun.

6. Assembly according to any of claims 1 to 5, wherein the sonotrode (16, 16') comprises a "support" surface (34, 34') designed to press against a "contact" surface (42a, 42b, 42c) when welding, wherein the support surface is flat and has an area of more than 10 mm$^2$, preferably more than 20 mm$^2$.

**EP 2 032 342 B1**

**Patentansprüche**

1. Schweißpistolenanordnung (10) und ihr Steuersystem (12), wobei die Pistole dazu bestimmt ist, durch Ultraschall ein Element (40a, 40b, 40c) an ein Werkstück aus Thermoplastmaterial (36a, 36b, 36c) zu schweißen, wobei eine bestimmte Leistung verbraucht wird, und die einen Griff (14), eine Sonotrode (16, 16'), einen Drücker (18) zum Betätigen der Sonotrode aufweist, wobei die Anordnung auch Mittel (22) zum automatischen Stoppen der Sonotrode aufweist, wobei die Anordnung Mittel (24) zum Erfassen des Überschreitens eines Schwellenwerts durch Variation der Steigerung der verbrauchten Leistung aufweist, und wobei die Mittel zum automatischen Stoppen mit den Erfassungsmitteln derart verbunden sind, dass sie ausgelöst werden, wenn diese Erfassung positiv ist, wobei die Anordnung einen Speicher (30) zum Speichern des Schwellenwerts aufweist.

2. Anordnung nach Anspruch 1, bei der die Erfassungsmittel (24) Mittel (26) zum Bestimmen der Variation der Steigerung der verbrauchten Leistung aufweisen, und Mittel (28) zum Vergleichen dieser Variation mit dem Schwellenwert, der in dem Speicher gespeichert ist.

3. Anordnung nach einem der Ansprüche 1 bis 2, bei der der Schwellenwert, der zu überschreiten ist, damit die Erfassungsmittel (24) die Stoppmittel (22) auslösen, größer ist als 5 %.

4. Anordnung nach einem der Ansprüche 1 bis 3, die Mittel (32) zum Messen der von der Pistole verbrauchten Energie aufweist, die die Erfassungsmittel (24) nur aktivieren können, wenn eine Mindestenergiemenge von der Pistole verbraucht wurde.

5. Anordnung nach einem der Ansprüche 1 bis 4, bei der das Steuersystem (12) zu einem von der Pistole getrennten Generator gehört.

6. Anordnung nach einem der Ansprüche 1 bis 5, bei der die Sonotrode (16, 16') eine Fläche (34, 34'), Stützfläche genannt, aufweist, die dazu bestimmt ist, sich im Laufe des Schweißens gegen eine Fläche (42a, 42b, 42c), Kontaktfläche genannt, zu stützen, bei der die Stützfläche eben und größer als 10 mm$^2$ ist, vorzugsweise größer als 20 mm$^2$.

**Fig. 1**

**Fig. 2**

EP 2 032 342 B1

**Fig. 3**

**Fig. 4**

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3184354 A